# EUROPEAN PATENT APPLICATION

(11) **EP 1 810 809 A2**
(43) Date of publication of application: **25.07.2007**
(21) Application number: 07000621.8
(22) Date of filing: 12.01.2007
(51) Int. Cl.: B29C 44/18

(54) **Method of filling an extruded profile with foam material**

(30) Priority: 24.01.2006 IT PI20060009
(71) Applicant: Checcucci, Antonio, 50028 Tavarnelle Val di Pesa FI (IT)
(72) Inventor: Checcucci, Antonio, 50028 Tavarnelle Val di Pesa FI (IT)
(74) Representative: Celestino, Marco

(57) **Abstract**

A method of filling an extruded profile (10) with foam material (30) comprising the steps of providing at least one longitudinal slit (13) along the whole length of the profile (10), providing an injector (16) for injecting an amount of said foam material (30) in said slit (13), providing a seal (12) for blocking said slit (13) after the injection of said foam material (30), putting said injector (16) in a predetermined zone of said profile (10) through said longitudinal slit (16), injecting said foam material in said profile (10) and at the same time causing a longitudinal relative movement between said injector (16) and said slit (13), stopping said slit with said seal.

## Description

### Field of the invention

The present invention relates to the field of extruded profiles and, in particular, it relates to a method to obtain an extruded profile, also of long length, filled with foam material.

### Description of the prior art

Extruded profiles of aluminium or resin are used in many fields, and, in particular, are very common for manufacturing doors and windows.

The technical problem is well known of filling with foam material extruded profiles having closed tubular cross section of various shape and of long length. In order to carry out the filling step, in fact, a large size equipment is necessary, capable of keeping the profile vertical when filling. A thin inlet tube for the liquid foam has to be inserted axially in the profile for all its length and extracted gradually releasing progressively the foam material. This way, the free end of the thin tube runs the whole length of the profile filling it completely with foam. It is apparent that this system has the drawback of requiring a long thin tube and a re-winding equipment for the thin tube when it is extracted from the profile. A further drawback of such systems is that in any case the profile cannot exceed a limit length for technological filling limits owing to the viscous friction of the foam in the thin tube, according to which a maximum length of the thin tube cannot be exceeded.

Another drawback is a reduced filling density of the profile with the foam material.

In any case, the main drawback of this system is the high production cost, since wide spaces are necessary and it is not possible to automate the process.

Other known systems for filling a tubular profile with a filling material provide that the tubular profile is split into longitudinal shell portions that are united to each other in a rolling step laying the foam material between them. This system has the drawback of providing the profile in more parts and to assemble them causing a reduction of mechanical resistance and higher costs of production. Furthermore, the advantages of having complex sections, like those obtainable with extruded profiles, are not available.

### Summary of the invention.

It is a feature of the present invention to provide a method for filling with a foam material a tubular extruded profile of desired length.

Another object of the present invention is to provide a method adapted to increase the mechanical resistance of such a tubular extruded profile.

It is a particular object of the invention to provide an extruded profile for doors and windows, in species rolling shutters, which is filled with foam material.

These and other objects are achieved by a method for making an extruded profile with closed tubular cross section, of desired length, the profile being filled with a foam filling material for the whole length, characterised in that it comprises the steps of:
- providing at least one longitudinal slit along the whole length of the profile;
- providing means for injecting an amount of the foam material comprising a foam material injector;
- prearranging stopping means adapted to block the longitudinal slit after the injection of the foam material;
- introducing the injector in a predetermined zone of the profile through the longitudinal slit;
- injecting the foam material in the profile and at the same time causing a longitudinal relative movement between the injector and the slit;
- closing the slit with the stopping means.

In particular, the extruded profile is obtained with a material selected from the group comprised of: a metal or a plastic material.

Advantageously, the closed tubular cross section comprises more than one chamber and more than one slit.

In a particular embodiment, the longitudinal slit on the extruded tubular profile is made by a milling step.

In particular, the extruded profile is a slat of a rolling shutter.

Advantageously, the foam material is a polyurethane foam.

In particular, the injector has a thin tube having a free end adapted to enter the longitudinal slit and to slide in the slit by a relative movement with respect to the profile.

Advantageously, the means for injecting comprises:
- means for adjusting the speed of the relative movement;
- means for adjusting the density of the foam material.

In a preferred embodiment, the longitudinal relative movement between the injector and the slit is generated by a translating and/or rotating movement of the profile along the slit direction.

Alternatively, the longitudinal relative movement between the injector and the slit is generated by a translating and/or rotating movement of the injector along the slit.

In a preferred embodiment, the stopping means comprises flexible resilient sealing means extending along a line, having a cross section selected from the group comprised of:
- a substantially I-shaped cross section;
- a substantially T-shaped cross section;
- a complex shape adapted to engage resiliently with in the slit.

In particular, the closing step of the slit is obtained engaging a first end of the resilient sealing means in a first end of the slit and then continuously engaging the resilient means following the slit for the whole length of the slit.

In particular, the resilient means are at first unwound from a coil for feeding continuously the resilient means into the slit during the closing step.

In particular, the flexible sealing means is at first coiled about a spool and unwound gradually for being engaged in the slit.

In particular, the resilient sealing means are obtained with a rubber seal.

This way, in case of a rolling shutter, the stopping means have the advantage of forming a resilient spacer between the slats that contact one another when the shutter is wound.

Alternatively, the stopping means comprises a closure member adapted to engage with the slit, having engagement means selected from the group comprised of:
- resilient fins;
- sliding portions;
- positive engagement portions;
- releasable fastening means;
- non-releasable fastening means selected from the group comprised of: welding, glueing, riveting.

### Brief description of the drawings

The invention will be made clearer with the description of some exemplary embodiments, exemplifying but not limitative, with reference to the attached drawings wherein:
- Figure 1 shows a segment of a rolling shutter according to the prior art;
- Figure 2 shows a segment of a rolling shutter with slats filled with a foam filling material according to the invention;
- Figure 3 shows a cross sectional view of a portion of a shutter filled according to the invention, wound on a support spool, where a rubber stopping member according to the invention has a function of resilient spacer between overlapping slats;
- Figure 4 shows a segment of a slat of a shutter according to the prior art, before being filled with the method according to the invention;
- Figure 5 shows a slat where a longitudinal slit has been obtained by milling;
- Figure 6 shows the filling step of the slitted slat with a foam material, by introducing an injector of foam material in the slit and by causing the injector to slide in the opening;
- Figure 7 shows the closing step of the above described slit after having injected the foam material, by a rubber seal with I-shaped cross section;
- Figure 8 shows a segment of a slat filled with the method according to the invention.

### Description of preferred exemplary embodiments

In the following description an example will be illustrated of a method to obtain an extruded profile of desired length filled for the whole length with a foam filling material.

In particular, the invention relates to a method for filling an extruded profile with foam material to be used as a slat for a rolling shutter, wherein said shutter is formed, according to the prior art, through a plurality of parallel and pivotally connected slats.

The foam material filling in the slat improves the heat insulation capacity and the mechanical resistance of the above described shutter.

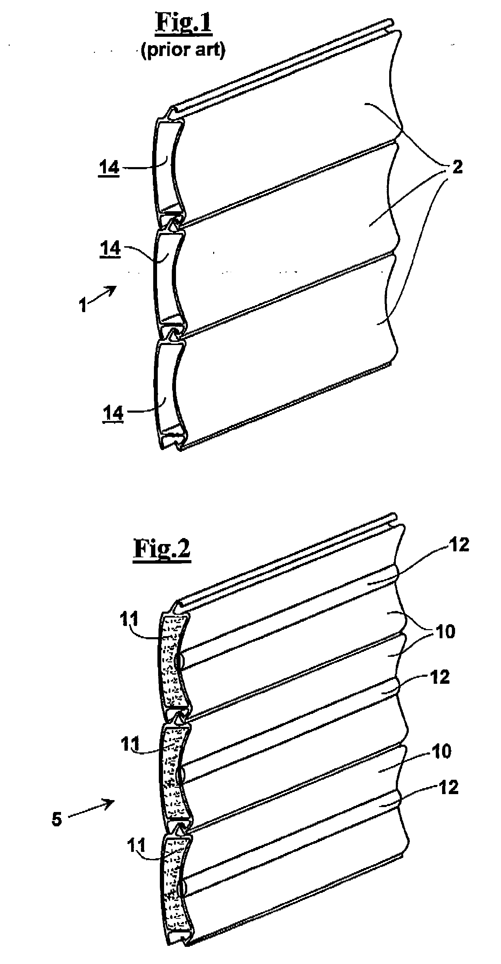

Figure 1 shows a segment of a rolling shutter 1, obtained according to the prior art, with a plurality of extruded slats 2 pivotally connected in succession, where such slats 2 are hollow by the presence of a longitudinal a channel 14.

Figure 2 shows, instead, a segment of a rolling shutter 5 where three slats 10 are shown made with the method according to the invention. They have a longitudinal slit not shown in the figure through which a foam filling material 11 is injected at first in liquid or creamy status capable of expanding in the channel 14 occupying all the space available and then hardening. The slats 10 comprise stopping means, for example consisting of a rubber seal 12 that engages with the above described slit and not visible.

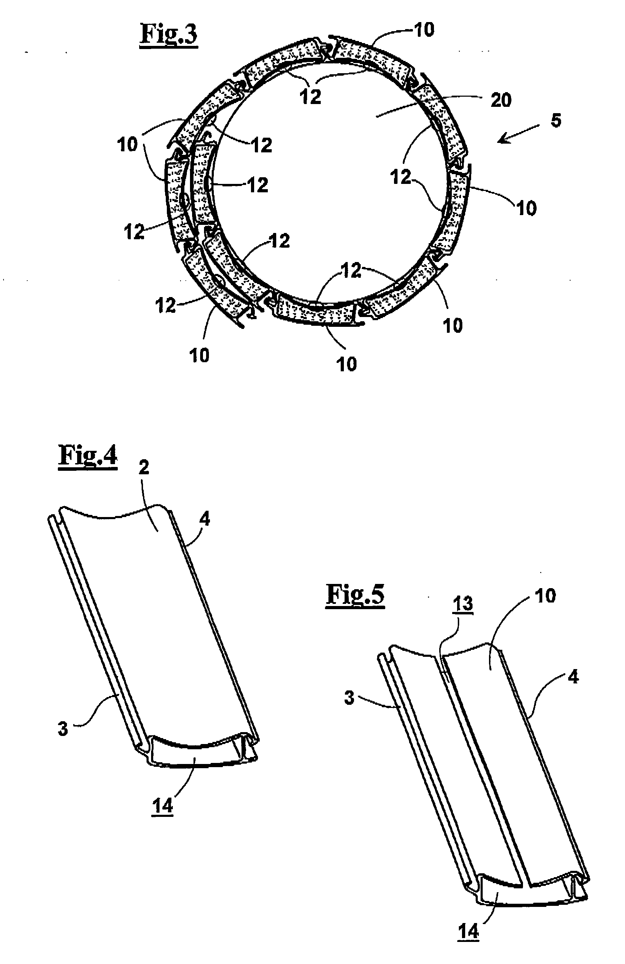

In figure 3, the shutter 5, consisting of the slats 10 made with the method according to the invention, is shown partially wound on a cylinder or drum 20 when the shutter 5 is in an intermediate position between shutter open and closed. In figure 3 it is shown how the presence of the rubber seal 12 reduces the possibility of contact between overlapping slats 10, such seals creating a resilient cushion between the slats. This way the step of closing the shutter is much less noisy than in the known rolling shutters. Furthermore, this resilient cushion reduces the wear for friction between slats of the shutter same.

Figures from 4 to 8 show respectively some successive steps of the method according to the invention for filling an extruded profile with foam material, for example for aluminium shutter slats.

In figure 4 a perspective view is shown of an extruded profile with tubular cross section 2 for rolling shutters, obtained according to the prior art. This profile 2 has an inner longitudinal channel 14, an embracing upper portion 3 and an embracing lower portion 4 that extend for the whole length of the profile, such portions being adapted to pivotally engage with respective adjacent profile. Figure 5 shows a profile 2 as described in figure 4, wherein, by a milling step an longitudinal slit 13 has been obtained on an inner face of the profile and for its whole length. Obviously, in an alternative embodiment of the profile, this slit 13 can be obtained by extrusion of the profile same, created directly in the profile.

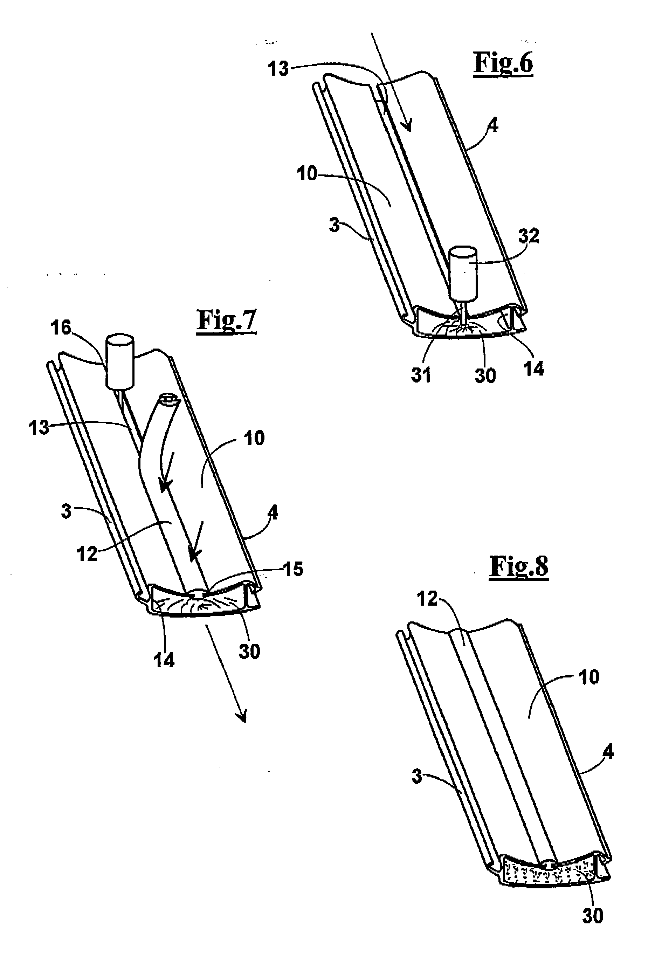

Figure 6 shows the transversal introduction step of an injector 32 with a thin tube 31 in a predetermined zone of the slit 13, for example near a first end of the profile 10. The injector 32 is capable of injecting an amount of foam material 30 in the channel 14, according to a density and a pression of the foam material. During this step a relative movement is obtained between thin tube 31 and profile 10, so that thin tube 31 follows slit 13 for the whole length and, thus, fills profile 10. In an advantageous implementation of the method, the profile 10 translates along slit 13, whereas the injector remains still. This way is remarkably easier the filling step of profile 10 of long length and, furthermore, allows to fill continuously more profiles arranged according in turn and aligned according to the respective slits 13 so that a second end of the slit of a previous profile coincides with the first end of a next profile.

Figure 7 shows a closing step of slit 13 immediately following the injection of foam material 30 in profile 10. this closing step is carried out by engaging stopping means in slit 13, for example a rubber seal 12. In a preferred embodiment, a first end of seal 12 engages with a first end 15 of the above described slit 13 and then continuing to engage rubber seal 12 along slit 13 up to stop completely slit 13 for its whole length up to a second end 16. In particular, seal 12 can be at first wound about a spool not shown and unwound gradually for being engaged in slit 13.

The whole method according to the invention can be automated providing an injection station and a closing station, not shown, mounted adjacent in a fixed position, while the profile 10 translate along the direction of slit 13.

Figure 8 shows a segment of a slat for a shutter 10 made with the method according to the invention.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A method to obtain an extruded profile with closed tubular cross section of desired length, said profile being filled with a foam filling material for its whole length, **characterised in that** it comprises the steps of:
- providing at least one longitudinal slit along the whole length of the profile;
- providing means for injecting an amount of said foam material comprising an injector of said material;
- prearranging stopping means adapted to block said longitudinal slit after the injection of said foam material;
- putting said injector in a predetermined zone of said profile through said longitudinal slit;
- injecting said foam material in said profile and at the same time causing a longitudinal relative movement between said injector and said slit;
- closing said slit with said stopping means.

2. A method, according to claim 1, wherein said extruded profile is obtained with a material selected from the group comprised of: a metal or a plastic material.

3. A method, according to claim 1, wherein said closed tubular cross section comprises more than one chamber and more than one slit.

4. A method, according to claim 1, wherein said longitudinal slit on said extruded tubular profile is made by a milling step.

5. A method, according to claim 1, wherein said extruded profile is a slat of a rolling shutter.

6. A method, according to claim 1, wherein said foam material is a polyurethane foam.

7. A method, according to claim 1, wherein said injector has a thin tube having a free end adapted to enter said slit and to slide longitudinally in said slit.

8. A method, according to claim 1, wherein said means for injecting comprises:
- means for adjusting the speed of said relative movement;
- means for adjusting the density of said foam material.

9. A method, according to claim 1, wherein said longitudinal relative movement between said injector and said slit is generated by a translating and/or rotating movement of said profile along said slit.

10. A method, according to claim 1, wherein said longitudinal relative movement between said injector and said slit is generated by a translating and/or rotating movement of said injector along said slit.

11. A method, according to claim 1, wherein said stopping means comprises flexible resilient sealing means extending along a line, having a cross section selected from the group comprised of:
- a substantially I-shaped cross section;
- a substantially T-shaped cross section;
- a complex shape adapted to engage resiliently with in said slit.

12. A method, according to claim 11, wherein said step of closing said slit is obtained engaging a first end of said resilient sealing means in a first end of said slit and then continuously engaging said resilient means along said slit for the whole length of said slit.

13. A method, according to claim 11, wherein said resilient means are at first unwound from a coil for feeding continuously said resilient means in said slit during said closing step.

14. A method, according to claim 11, wherein said resilient means are at first wound about a spool and fed gradually for being engaged in said slit.

15. A method, according to claim 11, wherein said resilient sealing means are obtained with a rubber seal.

16. A method, according to claim 1, wherein said stopping means comprises a closure member adapted to engage with said slit, having engagement means selected from the group comprised of:
- resilient fins;
- sliding portions;
- positive engagement portions;
- releasable fastening means;
- non-releasable fastening means selected from the group comprised of: welding, glueing, riveting.
